# EUROPEAN PATENT APPLICATION

(11) **EP 0 691 398 A1**
(43) Date of publication of application: **10.01.1996**
(21) Application number: 95201824.0
(22) Date of filing: 04.07.1995
(51) Int. Cl.: C11D 17/00, C11D 3/386, B01J 13/04

(54) **Process for making polymer capsules**

(30) Priority: 08.07.1994 US 272358
(71) Applicant: UNILEVER N.V., NL-3000 DK Rotterdam (NL); UNILEVER PLC, London EC4P 4BQ (GB)
(72) Inventor: Vasudevan, Tirucherai Varahan, Edgewater, NJ 07020 (US)
(74) Representative: Zweep, Robert-Jan

(57) **Abstract**

The present invention relates to a process for preparing matrix capsules having hydrophobic material sufficiently large to contain large size particle actives which process comprises dispersing actives in hydrophobic material, and dispersing the active containing hydrophobic in a polymer solution to form a polymer matrix emulsion of drops of said core material in said solution. It has been found that such capsules can be obtained by utilizing low shear rates previously uncontemplated using the standard shearing machinery of the art.

## Description

### Field of the Invention

The present invention relates to polymer matrix capsules, a process of preparation as well as their application in liquids detergent compositions. The invention further relates to an improved method of making capsules containing hydrophobic material, wherein the hydrophobic material is present in large droplets which enables incorporation of large size actives which show high activity.

### BACKGROUND

Encapsulation of sensitive ingredients, especially detergent enzymes, has been in practice for a number of years. Techniques range from encapsulating the enzymes in a reverse micelle (US 4,801,544) to protecting them in a hydrophobic fluid such as silicone oil and petroleum jelly (see US 4,906,396) or in a solid surfactant (US 4,090,973) or in a polymer matrix (WO 92/20,771). In many of the prior inventions, the enzyme is used either as an aqueous solution or as a finely dispersed colloidal size solid having a size of 1 µm and less.

US 4,090,973 uses large (1 µm to 2 mm) enzyme particles and these particles were dispersed in a hydrophobic core which was directly incorporated (dispersed) into the detergent formulation, without an outer layer. The enzyme material will however generally suffer from instability and/or may migrate from the hydrophobic core.

Capsules comprising solid actives inside a hydrophobic or oil core and surrounded by a hardened polymer solution are known, for example, from Applicants' copending European application numbers 94203197.2 (EP-A-653,485; US Serial Nos. 150,701 and 151,605). This application is incorporated herein by reference. In this reference, the capsule could be made using a "matrix capsule method" or using a "core shell" method. The matrix capsule method is characterized by the fact that the actives are found inside of drops of hydrophobic core material rather than one large hydrophobic core as in the core shell method.

In the matrix capsule method of that invention, active material (e.g. enzyme) is mixed with a hydrophobic material (e.g. silicone oil with dispersed enzyme particles). The hydrophobic core drops containing enzyme are then dispersed in a polymer solution (e.g. Acrysol ASE-95) using an overhead mixer. The homogenizer/mixer used in that case cannot make droplets large enough under homogeneous mixing conditions to allow incorporation of large active particles. In other words, one can make large size particles, but the compositions will usually not properly mix.

In the core shell method (different from the matrix capsule method of the invention), larger size actives can be incorporated using a specially designed triple nozzle, but applicants have found this system to be rate limiting and generally not suitable for commercial scale-up.

US 4,906,396 discloses the encapsulation of enzyme particles in the size range of 1 µm to 2 mm in a hydrophobic core material such as silicone oil or petroleum jelly. These capsules generally suffer from low stability, in particular in bleach containing liquids.

WO 92/20,771 (Allied Colloids) discloses capsules having a hydrophobic core and polymeric shell. The core requires a hydrophobic matrix polymer to keep active from migrating too quickly out of an oil layer. This is not required in the present capsules. Moreover, active encapsulated by the process of that reference are in the colloidal range (about 1µm). Thus, droplet size of the core is in the 10-30µm range rather than in the 100 to 1000µm range required for large actives. Further, using the homogenizer recommended in that reference, applicants were unable to produce larger size droplets because of poor mixing. While not wishing to be bound by theory, it is believed that, because of the inherent design of the homogenizer, mixing will be extremely poor at the low shear rates required to make large droplets (accomplished by decreasing rotor speed or RPM). More specifically, these homogenizers are designed to operate at high shear rates (i.e. ≧ 10,000 s⁻¹). That is, they are designed to make droplets much smaller (typically 100 times smaller) then those of the subject invention.

US 5,324,445 discloses liquids comprising enzyme capsules that generally have a size of below 20µm and that have been prepared by using a Silverson homogenizer which is a high shear mixer.

We have found that one or more of the above problems can be overcome by the present invention. Further, we have identified a need in the art for producing large droplet sizes (required for containing large size actives) while still producing good mixing (i.e., maintaining stable capsules) in a matrix capsule method for making capsules.

The present invention achieves high enzyme stability, e.g. in liquid detergent systems containing bleach material. We have further surprisingly found that dispersion of hydrophobic material into the polymer solution is one of the most challenging steps.

Applicants have found that if active containing hydrophobic drops are dispersed in polymer solution using a device producing a low (i.e., 10,000 s⁻¹ and below, e.g. higher than 0) but controlled shear rate, it is possible to retain large size hydrophobic droplets (i.e., 10 to 1000 microns) while maintaining good mixing. This in turn allows the incorporation of actives ranging in size from 0.01 to 500 microns while still providing a dispersion which is physically stable for at least 8 hours. Physical instability can be defined by either an increase in the droplet size, which occurs as a result of flocculation followed by coalescence of drops, or by separation of the two phases such that the top organic layer constitutes at least 5% by volume of the total emulsion. The process of the invention allows the production of polymer matrix capsules comprising large size solid or liquid actives including actives dissolved in aqueous solution, said solution being physically stable as defined above.

### SUMMARY OF THE INVENTION

Consequently, the present invention relates to a matrix capsules comprising:
(a) actives having a particle size of 0.01 to 500 microns;
(b) hydrophobic active-retaining material; and
(c) polymer material surrounding said hydrophobic material, wherein said hydrophobic material has a size of 10 to 1000 microns.

The invention further relates to a process for preparing matrix capsules comprising active, hydrophobic material and polymer, by dispersing the active into the hydrophobic material and dispersing the active containing hydrophobic material in a solution of the polymer by utilizing a device at shear rates such that:
(i) no more than 50% active is released from said hydrophobic material after shearing;
(ii) the hydrophobic material forms drops of 10 to 1000 microns; and/or
(iii) the emulsion has no more than 5% phase separation for 8 hours or greater.

The invention further relates to a process for preparing matrix capsules comprising active, hydrophobic material and polymer material, by mixing the active and the hydrophobic material, adding the mixture to the polymer material and applying a shear of lower than 10,000 s⁻¹.

Preferably, the mixture of active containing hydrophobic material and polymer is sprayed into a hardening solution.

Preferably, the hydrophobic material is selected from material:
(i) retaining at least 50% active after a dispersion of active in hydrophobic material is added to an aqueous solution;
(ii) demonstrating less than 10% phase separation at 37°C over 1 week when active is added to the hydrophobic material to form a dispersion; and/or
(iii) releasing more than 50% of active inside the hydrophobic material after first five minutes of a wash cycle measured at 50°C.

The invention further relates to liquid detergent compositions comprising capsules with a size of from 100 to 1000 mµ. Preferably, the composition has a structure and more preferably contains bleach material.

The invention further relates to a process for preparing liquid detergent compositions comprising capsules by preparing capsules with a low shear whereafter the capsules are mixed with the liquid detergent composition.

The invention further relates to a process of dispersing hydrophobic material in a polymer solution by applying shear with a flotation machine, preferably at a low shear rate.

Preferably, the hydrophobic core is sufficiently structured such that less than 10% of said actives phase separate from said cores at 37°C in one week.

Preferably, the device used to mix the hydrophobic core drops and polymer solution is a flotation machine. This machine is conventionally used for beneficiation of mineral ores and, as far as applicants are aware, has not been used for dispersion/emulsification of oil in polymer solutions.

Generally, after the active containing hydrophobic drops are dispersed in polymer solution, the hydrophobic material is sprayed into a hardening solution (e.g., acid electrolyte bath) to cure the polymer around the hydrophobic core.

### DETAILED DESCRIPTION OF THE INVENTION

The present invention is concerned with a process for making polymer matrix capsules including those described in EP 653,485 (US Serial No. 150,701 and 151,605), which is incorporated by reference into the subject application.

Preferably, no more than 50%, more preferably no more than 25%, most preferably, no more than 10% of solid are released from the hydrophobic core drops during dispersion.

Preferably, the hydrophobic core droplets remaining after dispersing in polymer solution are 10 to 1000 microns, more preferably 100 to 1000, most preferably 200 to 1000, in particular preferred 300 to 1000 microns in size.

Preferably, the size of the hydrophobic core droplets is measured in weight average particle size D(3,2), as described by M. Alderliesten, Anal. Proc. Vol. 21, May, 1984, 167-172.

Preferably, the dispersion of drops in polymer solution is physically stable (as defined above) for 8 hours or greater.

More particularly, the capsules made by the process of the invention comprise:
(a) an active subject to degradation by components in an aqueous liquid cleaning composition in which they are found;
(b) a hydrophobic core (in the matrix capsule, these are preferably in the form of hydrophobic core droplets each containing the active (a) rather than one large core containing active (a) such as is made in the core shell method which is not a preferred part of the subject invention); and
(c) a polymer shell matrix surrounding the hydrophobic core drops.

### Hydrophobic material

Hydrophobic material of the invention (which may also be called hydrocarbon, hydrophobic oil or hydrocarbon core material, etc.) are defined by meeting one or more of three defined criteria set forth below: (1) by their ability to retain active in the dispersion in an aqueous solution; (2) by their ability to withstand phase separation at ambient or elevated temperatures over time; and (3) by their ability to rapidly and effectively release the encapsulated actives in use. As noted, the hydrophobic material meets one or more of the three defined criteria to be selected as the hydrophobic material of the invention.

According to the first criterion, the hydrophobic material is defined by its ability to retain at least 50% active, preferably 75%, more preferably 90% after adding the active dispersed in hydrophobic material to an aqueous solution. Typically, the actives will stay in the hydrophobic material for at least an hour and up to weeks and months if not more.

A second criterion by which the hydrophobic material is defined is its ability to hold the active in place and to prevent the active from diffusing or precipitating out of the oil phase. The stability of active dispersed in the hydrophobic material can be determined by adding the active dispersed in hydrophobic material to a 10 ml graduated cylinder and measuring the phase separation of the active from the hydrophobic material. It should be less than 10%, preferably less than 5% of phase separation when measured at 37°C for 1 week.

The third criterion used to define the hydrophobic material is its ability to rapidly and effectively release the active in use. The oil release property can be determined by a standard Terg-O-Meter washing method. Terg-O-Meter are well-known in the art such as, for example Terg-O-Tometer UR7227. In these devices, generally, 500 mls of wash liquid are agitated at above 70 rpm for about 20 minutes using desired wash liquid. The capsules of the invention were tested using 1000 mls at 100 rpm for 15 and 30 minutes in the range of 20-40°C.

The capsule should release more than 50%, preferably more than 70% of the active after the first five minutes of the wash cycle when measured at 50°C.

The hydrophobic material can be a liquid or a semi-solid at room temperature, e.g. an oil or a hydrocarbon compound.

Liquid oils alone with a viscosity of less than 10,000 centipoises (cps) such as mineral oils, silicone oils or vegetable oils are generally not suitable for this invention and require modification. These oils do not have the capability to hold and retain hydrophilic actives and do not provide sufficient protection to the active in a liquid detergent. The preferred liquid oil components are oils containing hydrophobic particles with particle size less than 3µ, preferably less than 1µ, more preferably less than 0.1µ. Examples of such hydrophobic particles are hydrophobic silica such as Cabot's Cab-O-Sil TS 720 and Cab-O-Sil TS 530 or Degussa's Aerosil 200; and hydrophobic clay such as Rheox's Bentone SD-1. These hydrophobic particles can be incorporated into the oil physically i.e., simply by mixing the oil with the hydrophobic particles or chemically, i.e., through the chemical interaction of oil with the surface of the particles. The preferred hydrophobic particles are submicron sized hydrophobically modified fumed silica such as Cab-O-Sil TS 720. These hydrophobic particles can enhance the suspension of actives in the oil and also increase the capability of oil to retain the actives in an aqueous solution. Typically the amount of hydrophobic particles in the oil is less than 15%, preferably less than 10%, more preferably less than 5% but more than 0.5% should be used.

In preferred embodiments of the invention, the oil component is defined by the fact that it is a semisolid rather than a liquid at room temperature. Specifically, when the component has a melting temperature of from about 35°C to 70°C, preferably 40°C to 65°C, the semisolids are found to retain the active more readily. Moreover, such materials release active under wash condition rapidly enough to give wash performances comparable to compositions in which enzymes have been newly added. Since these semisolid oils will also slow migration of actives out of the oil phase or slow migration of bleach and other harsh components toward the actives, they are again preferred.

Examples of such semisolid oils are petrolatums such as Penreco's Penreco Snow, Mineral Jelly and Tro-Grees; moltwax, e.g. Witco's Multiwax; fats (e.g., glyceryl ester of C₁₂-C₂₄ fatty acids); or fat derivatives such as mono-, di- or tri-glycerides and fatty alkyl phosphate ester. Hydrophobic particles such as hydrophobic fumed silica are also desirably incorporated into these semisolid oils to further enhance their ability to retain actives, especially when the capsule of this invention is processed or stored at a temperature close to or above the melting point of the semisolid oils.

The viscosity of the core at room temperature, measured at 400s⁻¹ shear rate, should be in the range of 10 to 10,000 mPas, preferably 50 to 5000 mPas and more preferably 100 to 1000 mPas.

### Polymer

The polymer suitable for the polymer shell of the capsule of the invention must be insoluble in the composition of the liquid cleaning product and must disintegrate or dissolve during the use of the product simply by dilution with water, pH change or mechanical forces such as agitation or abrasion. The preferred polymers are water soluble or water dispersible polymers that are or can be made insoluble in the liquid detergent composition. Such polymers are described in EP 390,503; US 4,777,089; US 4,898,781; US 4,908,233; US 5,064,650 and US Serial Nos. 07/875,872 and 07/875,194, all of which are incorporated by reference into the subject application.

These water soluble polymers display an upper consulate temperature or cloud point. As is well known in the art (P. Molyneaux, Water Soluble Polymers CRC Press, Boca Raton, 1984), the solubility or cloud point of such polymers is sensitive to electrolyte and can be "salted out" by the appropriate type and level of electrolyte. Such polymers can generally be efficiently salted out by realistic levels of electrolyte (<10%). Suitable polymers in this class are synthetic nonionic water soluble polymers including: polyvinyl alcohol; polyvinyl pyrrolidone and its various copolymers with styrene and vinyl acetate; and polyacrylamide and its various modification such as those discussed by Molyneaux (see above) and McCormick (in Encyclopedia of Polymer Science Vol 17, John Wiley, New York). Another class of useful polymers are modified polysaccharides such as carrageenan, guar gum, pectin, xanthan gum, partially hydrolyzed cellulose acetate, hydroxy ethyl, hydroxy propyl and hydroxybutyl cellulose, methyl cellulose and the like. Proteins and modified proteins such as gelatin are still another class of polymers useful in the present invention especially when selected to have an isoelectric pH close to that of the liquid composition in which the polymers are to be employed.

From the discussion above, it is clear that a variety of hydrophilic polymers have potential utility as the polymer coating for the capsules of this invention. The key is to select an appropriate hydrophilic polymer that would be essentially insoluble in the composition (preferably a concentrated liquid system) under the prevailing electrolyte concentration, yet would dissolve or disintegrate when this composition is under conditions of use. The tailoring of such polar polymers is well within the scope of those skilled in the art once the general requirements are known and the principle set forth.

The fraction of polymer solution (aqueous solution) which will form the polymer matrix continuous phase should be such that the ratio by weight of organic core to polymer solution is in the range of 0.001 to 100, preferably 0.01 to 10, and most preferably 0.05 to 5.

### Active material

The active materials which are desired to be encapsulated by the capsule of this invention are those materials which will lose their activity in a cleaning product, especially a bleach-containing liquid cleaning product, if no hydrophobic coating is added according to this invention. The active materials protected by the hydrophobic layer may be a hydrophilic active (e.g., enzyme or bleach catalyst) or a hydrophobic active (e.g., perfume) and can be solid, liquid or in aqueous solution. If it is a solid material, the particle size of the active are typically 0.01 to 500µm, preferably 0.01 to 400µm, more preferably 0.01 to 50µm. Large size active particles of 250-500µm, preferably 100 to 400µm can be readily made using the process of the invention, but due to formulation constraints; more typically, the particles have an average size of about 50 to 100µm. Of course, since a hydrophobic active is generally readily protected by a hydrophobic layer and is generally not readily degraded by harsh components in composition, the benefits of the invention are more readily apparent when the active ingredient is a hydrophilic one. Hydrophilic active materials include enzymes, bleach catalysts, peracid bleaches, bleach activators and optical brighteners.

One preferred ingredient of the capsules disclosed herein is an enzyme. The enzymes may be amylases, proteases, lipases, oxidases, cellulases or mixtures thereof. The amylolytic enzymes for use in the present invention can be those derived from bacteria or fungi. Preferred amylolytic enzymes are those described in British Patent Specification No. 1,296,839, cultivated from the strains of *Bacillus licheniformis* NCIB 8061, NCIB 8059, ATCC 6334, ATCC 6598, ATCC 11,945, ATCC 8480 and ATCC 9945A. A particularly preferred enzyme is an amylolytic enzyme produced and distributed under the trade name, Termamyl, by Novo Industri A/S, Copenhagen, Denmark. These amylolytic enzymes are generally sold as granules and may have activities from about 2 to 10 Maltose units/milligram. The amylolytic enzyme is normally included in an amount of from 1% to 40% by weight of the capsule, in particular from 5 to 20% by weight.

The actives may also be a proteolytic enzyme. Examples of suitable proteolytic enzymes are the subtilisins which are obtained from particular strains of *B*. *subtilis and B*. *licheniformis,* such as those commercially available under the trade names Maxatase, supplied by Gist-Brocades NV, Delft, Netherlands, and Alcalase, supplied by Novo Industri A/S, Copenhagen, Denmark. Particularly preferred are the proteases obtained from a strain of *Bacillus having* a maximal activity throughout the pH range of 8-12, being commercially available under the trade names of Esperase and Savinase, sold by Novo Industri A/S. These proteolytic enzymes are generally sold as granules and may have enzyme activities of from about 500 to 50,000 glycine units/milligram. The proteolytic enzyme is normally included in an amount of from about 1% to about 40% by weight of the capsule, in particular of from 5% to 20% by weight.

Lipolytic enzymes may also be included in order to improve removal of fatty soils. The lipolytic enzymes are preferably included in an amount of from about 1% to about 40%, preferably from 5% to 20% by weight. Cellulase enzymes may be used in an amount from about 1% to 40% by weight of the capsule.

The total content of the enzyme in the capsules of the present invention is from about 1% to about 40%, preferably from about 3% to about 15%.

It should be understood that the enzyme may also be a genetically engineered variation of any of the enzymes described have engineered to have a trait (e.g. stability) superior to its natural counterpart.

The protected actives may also be peroxygen compound activators, peracid bleaches, bleach catalysts, optical brighteners or perfumes.

Peroxygen compound activators are organic compounds which react with the peroxygen salts (e.g. sodium perborate, percarbonate, persilicate) in solution to form an organic peroxygen acid as the effective bleaching agent. Preferred activators include tetraacetylethylenediamine; tetraacetyglycoluril, glucosepentaacetate, xylose tetraacetate, sodium benzoyloxybenzene sulfonate and choline sulfophenyl carbonate. The activators may be released from the capsule to combine with peroxygen compound in the composition.

When activator is included, the ratio between the peroxygen in solution and the activator lies in the range of from 8:1 to 1:3, preferably 4:1 to 1:2, and most preferably is 2:1.

Also, the active inside the compounds may be a bleach catalyst (i.e. for activating peracids found in the composition outside the capsule).

Examples of such catalysts include manganese catalysts of the type described in US 5,153,161 or US 5,194,416, both of which are incorporated by reference into the subject application; sulfonomine catalysts and derivatives such as described in US 5,041,232, US 5,045,223 and US 5,047,163, all three of which are incorporated by reference into the subject application.

More particularly, manganese catalysts include, for example, manganese complexes of the formula:

IV [LMn (OR)₃]Y

wherein:
Mn is manganese in the +4 oxidation state;
R is a C₁-C₂₀ radical selected from the group consisting of alkyl, cycloalkyl, aryl, benzyl and radical combinations thereof;
at least two R radicals may also be connected to one another so as to form a bridging unit between two oxygens that coordinate with the manganese;
L is a ligand selected from a C₃-C₆₀ radical having at least 3 nitrogen atoms coordinating with the manganese; and
Y is an oxidatively-stable counterior.

The sulfonomines include compounds having the structure:

R¹R²C=NSO₂R³

wherein:
R¹ may be a substituted or unsubstituted radical selected
from the group consisting of hydrogen, phenyl, aryl, heterocyclic ring, alkyl and cycloalkyl radicals;
R² may be a substituted or unsubstituted radical selected from the group consisting of hydrogen, phenyl, aryl, heterocyclic ring, alkyl, cycloalkyl, R¹C=NSO₂R³, nitro, halo, cyano, alkoxy, keto, carboxylic, and carboalkoxy radicals;
R³ may be a substituted or unsubstituted radical selected from the group consisting of phenyl, aryl, heterocyclic ring, alkyl, cycloalkyl, nitro, halo and cyano radicals;
R¹ with R² and R² with R³ may respectively together form a cycloalkyl, heterocyclic, and aromatic ring system.

Sulfonomine derivatives include compounds having the structure: 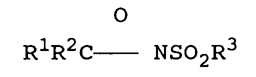
wherein:
R¹ may be a substituted or unsubstituted radical selected from the group consisting of hydrogen, phenyl, aryl, heterocyclic ring, alkyl and cycloalkyl radicals;
R² may be a substituted or unsubstituted radical selected from the group consisting of hydrogen, phenyl, aryl, heterocyclic ring, alkyl, cycloalkyl, 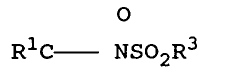
nitro, halo, cyano, alkoxy, keto, carboxylic and carboalkoxy radicals;
R³ may be substituted or unsubstituted radical selected from the group consisting of phenyl, aryl, heterocyclic ring, alkyl, cycloalkyl, nitro halo, and cyano radicals;
R¹ with R² and R² with R³ may respectively together form a cycloalkyl, heterocyclic, and aromatic ring system.

Bleach activators are particularly good candidates for bleach encapsulation both because they are used in very small amounts and because they are readily deactivated in solution.

More specifically, bleach activators are used in an amount from about 1% to 30% by weight of the capsule composition, preferably 3% to 15% by weight.

As mentioned above, the actives may also be optical brighteners or perfumes.

Although peroxyacids are generally contemplated for use in the composition rather than the capsule, peroxyacid compounds may be used as the active in the capsule as well, particularly in compositions where conditions are so harsh as to deactivate the peroxyacid.

Generally, the peroxyacids are amido or imido peroxyacids and are present in the range from about 0.5 to about 50%, preferably from about 15 to about 30% by weight of the capsule. Preferably, the peroxyacid is an amide peracid. More preferably, the amide is selected from the group of amido peracids consisting of N,N'-Terephthaloyl-di(6-aminopercarboxycaproic acid) (TPCAP), N,N'-Di(4-percarboxybenzoyl)piperazine (PCBPIP), N,N'-Di(4-Percarboxybenzoyl)ethylenediamine (PCBED), N,N'-di(4-percarboxybenzoyl)-1,4-butanediamine (PCBBD), N,N'-Di(4-Percarboxyaniline)terephthalate (DPCAT), N,N'-Di(4-Percarboxybenzoyl)-1,4-diaminocyclohexane (PCBHEX), N,N'-Terephthaloyl-di(4-amino peroxybutanoic acid) (C₃ TPCAP analogue called TPBUTY) N,N'-Terphthaloyl-di(8-amino peroxyoctanoic acid) (C₇ TPCAP analogue called TPOCT), N,N'-Di(percarboxyadipoyl)phenylenediamine (DPAPD) and N,N'-Succinoyl-di(4-percarboxy)aniline (SDPCA). Such compounds are described in WO 90/14,336.

Other peroxyacids which may be used include the amidoperoxy acids disclosed in US 4,909,953 and US 5,055,210, both of which are incorporated by reference into the subject application.

### Liquid

Preferably, capsules according to the present invention are used in liquid detergent compositions. Such compositions may contain surfactant material (anionic, nonionic, cationic, zwitterionic and/or amphoteric), builder material, water and other minor ingredients.

Preferably, the liquid has a structure, more preferably a structure of lamellar droplets of surfactant material. Such a structure is well-known in the art and can be broght about by dissolving active in water, preferably (but not exclusively, in the presence salting-out electrolyte.

Preferably, liquids according to this aspect of the invention contain salting-out electrolytes which is defined as electrolytes having a lyoptic number of lower than 9.5, preferably less than 9.0. Examples of such materials are sulphate, citrate, NTA and carbonate.

Preferably, the liquids according to the present invention contain bleach material. The bleach material may be selected from any of the materials mentioned above.

Preferably, liquid detergent compositions according to the present invention are prepared by preparing capsules with a low shear whereafter these capsules are mixed with the liquid detergent composition.

### Process

The present invention revolves around an improved method for making the capsules defined above such that large size actives can be protected. It is extremely important to prepare capsules that protect large size actives, since majority of actives such as bleaches and enzymes are commercially available only in large sizes and milling them to smaller sizes can be prohibitive from economic, safety and stability standpoints. The key to this, in turn, is to be able to create an emulsion of hydrophobic drop (disperse phase) in polymer solution (continuous phase) where the emulsion can be prepared while retaining droplets having a particle size of 10 to 1000 microns, preferably 50 to 1000, more preferably 100 to 1000, more preferably 200 to 1000, more preferably 300 to 1000, and most preferably 400 to 1000.

The homogenizers used to emulsify the droplets into the polymer solution have never been able to create droplets of this range. This is because, if the shear rate is too low, mixing is very poor and a stable emulsion cannot be successfully made. That is, the equipment conventionally used to make oil in water dispersions (or emulsion) work efficiently only at shear rates of greater than about 10,000s⁻¹. At these rates:
(1) droplets produced are under 100 microns; and
(2) solids inside the drops are released.

Unexpectedly, applicants have found that a flotation machine of the type used for beneficiation of mineral ores, under typical operating conditions for such machines, creates the type of shear (estimated shear rates of 500 to 2000s⁻¹) required to produce the droplet sizes and lack of actives release from drops required for the invention.

Consequently, the present invention also relates to a process of dispersing hydrophobic material in a polymer solution by applying shear with a flotation machine, preferably at a low shear rate.

Specifically, the process of the invention comprises:
(1) dispersing active particles into hydrophobic core drop material (this can be done as either using an overhead mixer or milling the solid active - hydrophobic core mixture using any type of attrition device such as a ball mill or a stirred media mill);
(2) dispersing the active containing hydrophobic drops in a polymer solution to form a polymer matrix emulsion with the hydrophobic drops as disperse phase and polymer solution as continuous phase; this step is done using a device which operates at shear rates low enough such that:
   (a) no more than 50%, more preferably no more than 25%, most preferably no more than 10% of the active is released from the drops after shearing to form the emulsion;
   (b) the hydrohobic drops in the emulsion can be as large as 1000 microns, i.e., 10-1000, preferably 100-1000, more preferably 200-1000, more preferably 300 to 1000, most preferably 400 to 1000; and
   (c) the emulsion is physically stable for 8 hours or greater (physical stability as measured by no more than 5% phase separation).

One device which can be used to create this low shear rate such that the conditions described above are met is a flotation machine such as is described in Society of Mineral Engineers Handbook [N. L. Weiss Ed., Section 5, pg. 82-109] which is hereby incorporated by reference into the subject application.

The emulsion can be made in the temperature range of 5 to 80°C, preferably 10 to 60°C, more preferably 15 to 50°C and most preferably 20 to 40°C;
the concentration of fraction, expressed in weight, of the hydrophobic drops/organic phase can be varied in the range of 0.1 to 99%, preferably 1 to 90%, more preferably 5 to 50% and most preferably 10 to 25%;
the loading of the active solids in the hydrophobic drops/organic phase can be varied in the range of 0.001 to 99%, preferably 0.001 to 90%, more preferably 0.001 to 50% and most preferably 0.001 to 20%;
the impeller speed can be varied in the range of 10 to 100,000 rpm, preferably 50 to 5000 rpm, more preferably 100 to 2000 rpm and most preferably 500 to 1000 rpm.

After the emulsion is made, the matrix capsules of the subject invention are prepared by spraying the emulsion into a hardening solution to cure the polymer matrix around the hydrophobic core drops; during spraying the liquid flow rate can be varied in the range of 0.001 to 100,000 g/min., preferably 0.01 to 10,000 g/min., more preferably 0.1 to 1,000 g/min. and most preferably 1 to 100 g/min; the mass ratio of liquid to air flow rates can be varied in the range of 0.001 to 100,000, preferably 0.01 to 1000; more preferably 0.1 to 100 and most preferably 1 to 10; the spray height can be varied in the range of 1 to 1000 cm, preferably 5 to 500 cm and most preferably 10 to 250 cm.

Unless stated otherwise, all percentages discussed in the examples and specification are % by wt.

The following examples are included to further illustrate and describe the invention and are not intended to limit the invention in any way.

### Example 1

This example is to compare the droplet sizes obtained using flotation machine relative to conventionally used homogenizers for producing emulsions.

| Equipment | Sample Amount¹ grams | Mixing Time² minutes | Max Drop Size Microns | Mean Drop Size Microns |
|---|---|---|---|---|
| Flotation machine³ | 400.0 | 1.0 | 600 | 440 |
| Homogenizer³ | 150.0 | 0.5 | 250 | 210 |

| | | | | |
|---|---|---|---|---|
| ¹ Minimum amount required for the size of the equipment used. | | | | |
| ² Minimum time required to obtain homogeneous mixing as observed visually. | | | | |
| ³ Operated at minimum agitation conditions at which mixing was homogeneous. | | | | |

The example shows that much larger droplet sizes can be obtained with the flotation machine than the conventionally used homogenizers, when the two machines are operated under their lowest possible shear rate (in other words speed) conditions at which homogeneous mixing as visually observed.

Flotation machine used in our experiments is a model D-12 laboratory flotation machine purchased from Denver Equipment Company, Colorado Springs, Colorado, USA. Although only the machine from the above mentioned manufacturer was used in our experiments, any flotation machine supplied by various suppliers such as Wemco, Agitair etc., can be used to make emulsions of the type described in the present invention.

### Example 2

### Solid Release From the Hydrophobic Droplet to Polymer Solution During Emulsification

Denver D12 Flotation Machine
Impeller Speed = 650 rpm
Aq. Phase = 5 Wt.% PVA-ASE 60 (2:1) Solution
Org. Phase = 1:1 Tro-Grees: Petrolatum plus 8 Wt.% Savinase
Powder [Protease Enzyme, Ex: Novo]
Savinase Powder Particle Size about 1 to 50 microns
Temperature = 25°C; Aqueous Phase: Organic Phase = 9:1 (wt./wt.)

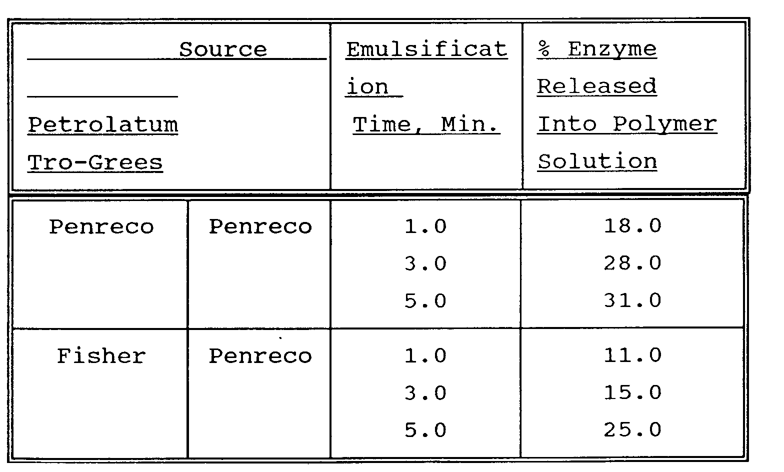

This example shows that the amount of enzymes released depends both on the source of petrolatum as well as emulsification time.

### Examples 3-6

These examples show the effect of material and process parameters on the droplet size obtained with the flotation machine. In all the experiments sodium sulfate [approximately 10-50 µm in size] was used as the solid but any other solid can be used. The petrolatum samples used in all the example shown henceforth are obtained from Penreco.

### Example 3

### EFFECT OF DISPERSE PHASE COMPOSITION ON DROPLET SIZE

Denver D12 Flotation Machine
Aq. Phase = 5 wt% PVA - ASE 60 * (2:1) solution
Impeller Speed = 650 rpm
Aq.: Org. Phase (Petrolatum:Tro Grees)* = 9:1 (wt/wt)
Agitation Time = 2 min
Temperature = 23°C

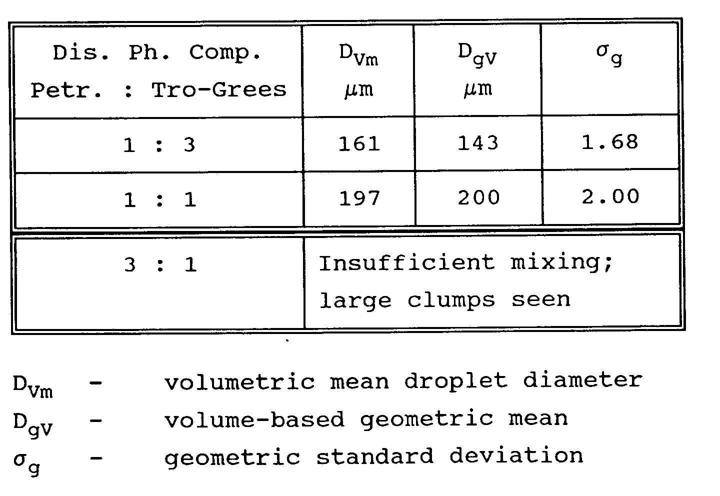

This examples shows that droplet size increases with increase in viscosity ratio, but above a certain value mixing obtained is poor.
*PVA - Polyvinyl alcohol [Airvol 540; ex: Air Products]
*ASE 60 - Highly cross-linked polyacrylic acid [ex: Rohm & Haas]
*Petrolatum - Snow white petrolatum [ex: Penreco]
*Tro-Grees - Spray Tro-Grees [ex: Penreco]

### Example 4

### EFFECT OF DISPERSE PHASE (ORG. PHASE) CONCENTRATION ON DROPLET SIZE

Denver D12 Flotation Machine
Aq. Phase = 5 wt% PVA - ASE 60 (2:1) solution
Impeller Speed = 650 rpm
Org. Phase = 1 : 1 Tro-Grees : Petrolatum + 15 wt% Sod. Sulfate
Temperature = 23°C
Agitation Time = 2 min.

| Dis. Ph. Comp. wt% | D_{Vm} µm | D_{gV} µm | σ_{g} |
|---|---|---|---|
| 10.0 | 197 | 200 | 2.00 |
| 14.3 | 381 | 400 | 1.81 |
| 25.0* | 210 | 200 | 1.90 |
| D_{Vm} - volumetric mean droplet diameter D_{gV} - volume-based geometric mean σ_{g} - geometric standard deviation | | | |

| | | | |
|---|---|---|---|
| * - Unstable liquid; larger droplets found initially phase separated leaving the emulsion rich in small droplets. | | | |

This example shows that larger droplets can be obtained by increasing the disperse phase (organic phase volume) concentration, but above a certain concentration (25 wt% in this case) the droplets get too large to be stable in the aqueous phase.

### Example 5

### EFFECT OF SOLIDS LOADING OF THE DISPERSE PHASE (ORGANIC PHASE) ON DROPLET SIZE

Denver D12 Flotation Machine
Aq. Phase = 5 wt% PVA - ASE 60 (2:1) solution
Impeller Speed = 650 rpm
Org. Phase = 1 : 1 Tro-Grees : Petrolatum + 15 wt% Sod. Sulfate
Temperature = 23°C
Agitation Time = 2 min.
Aq. : Org. = 9 : 1 (wt/wt)

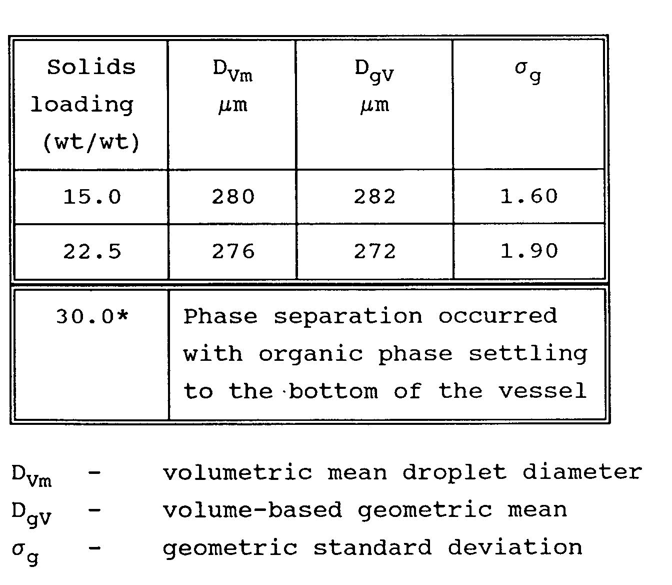

This examples shows that increasing the solids concentration to 30.0 weight percent increases the density of the organic phase/hydrophobic drops to a value (1.635 gm/cc in this case) at which phase separation occurs, at polymer concentration used in this example. It should be understood that at higher polymer concentrations, higher solids loadings can be achieved.

### Example 6

### EFFECT ON IMPELLER SPEED ON DROPLET SIZE

Denver D12 Flotation Machine
Aq. Phase = 5 wt% PVA - ASE 60 (2:1) solution
Impeller Speed = 650 rpm
Org. Phase = 1:1 Tro-Grees:Petrolatum + 15 wt% Sod. Sulfate
Temperature = 23°C
Agitation Time = 2 min.
Aq. : Org. = 9 : 1 (wt/wt)

| Speed rpm | D_{Vm} µm | D_{gV} µm | σ_{g} |
|---|---|---|---|
| 550 | 310 | 310 | 1.80 |
| 650 | 280 | 282 | 1.60 |
| 750 | 220 | 205 | 2.00 |
| D_{Vm} - volumetric mean droplet diameter D_{gV} - volume-based geometric mean σ_{g} - geometric standard deviation | | | |

This examples shows that, within the range tested, the droplet size is proportional to agitation speed and hence the shear rate.

### Example 7 and 8

These examples show conditions under which the emulsion can be sprayed in order to obtain capsules with desired properties.

### Example 7

This example is to show conditions under which the emulsion can be sprayed without rupturing the droplets.

### EFFECT OF SPRAYING CONDITIONS ON EMULSION DROPLET SIZE

Aqueous phase : 5 wt% PVA - ASE 60 (2:1) solution
Organic phase : 1:1 Tro-Grees-Petrolatum + 15 wt% Na₂SO₄
Emulsification: 9 : 1 Aqueous : Organic phase
Flotation machine, 650 rpm, 2 min.

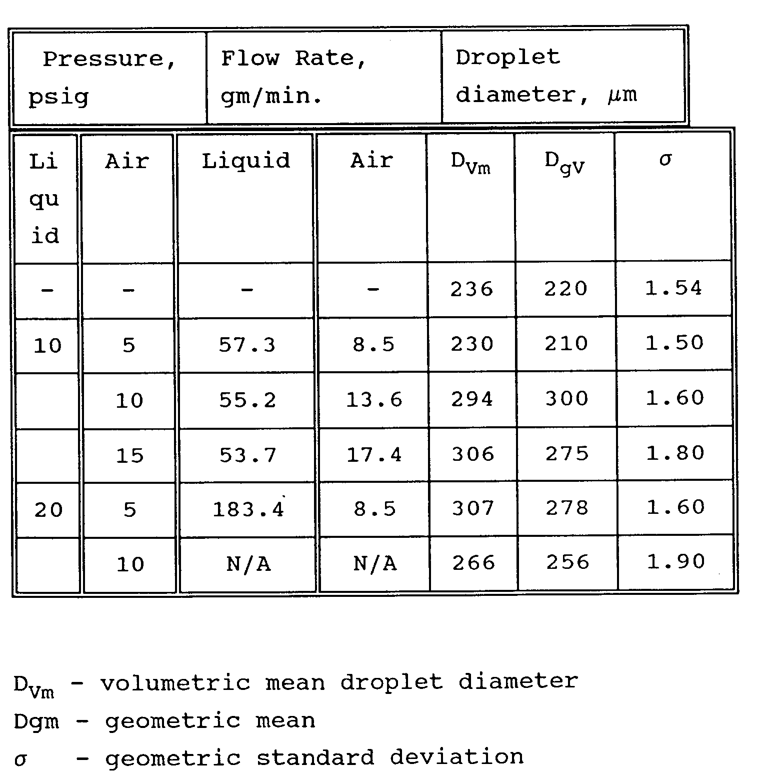

This examples shows that under conditions of liquid and air pressure used, the emulsion can be sprayed without rupturing the emulsion droplet.

### Example 8

### EFFECT OF RELATIVE VELOCITY AND SPRAY HEIGHT ON AEROSOL PARTICLE SIZE AND MORPHOLOGY

Aqueous phase : 5 wt% PVA - ASE 60 (2:1) solution
Organic phase : 1 : 1 Tro-Grees - Petrolatum + 15 wt% Na₂SO₄
Emulsification: 9 : 1 Aqueous : Organic phase
Flotation machine, 650 rpm, 2 min.

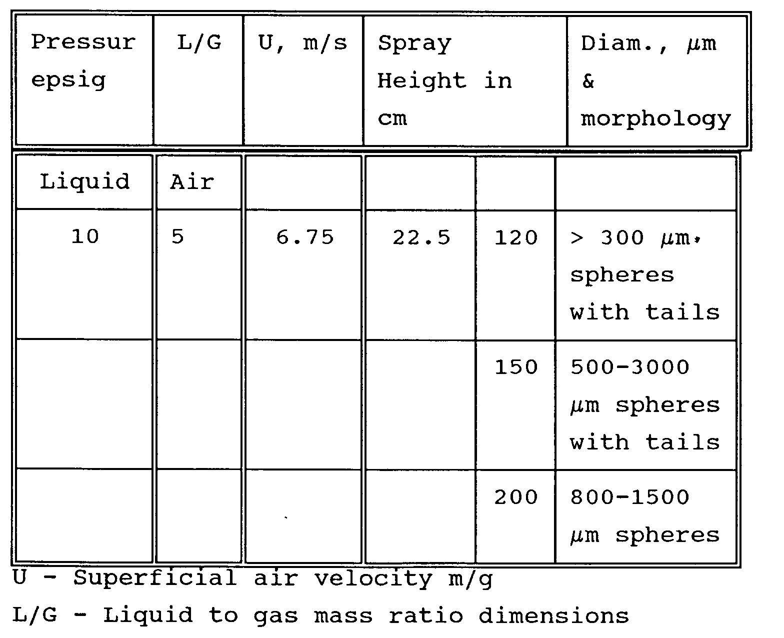

This example also shows that at liquid and air pressures of 5 and 10 psig respectively and using a spray height of 200 cm, discrete spherical capsules of 800-1500 µm can be obtained.

### Example 9

### MATERIALS AND PROCESS CONDITIONS FOR TYPICAL MATRIX CAPSULE PREPARATION

### EMULSIFICATION

Aqueous phase : 5 wt.% PVA - ASE 60 (2:1) solution
Organic phase : 15 wt.% Savinase [Protease enzyme, ex: Novo] in 1:1 Tro-grees : Petrolatum
Aqueous / Organic phase = 9:1 (wt/wt)
Flotation machine, 600 rpm, 2 min.

### SPRAYING

Two Fluid Spray Nozzle, 1500 µm opening
Air : 5 psig ; Liquid : 10 psig
Spray height : 200 cm

### CAPSULE DIMENSIONS

Average core size = 250 µm
Capsule size = 200 - 800 µm
The performance of enzyme capsules prepared under the conditions stated in Example 9 was tested against liquid enzyme [unencapsulated enzyme] on a cotton test cloth stained with casein [AS 10 test cloth, ex: Center for Test Materials] using a Tergo-to-meter. Tergo-to-meter is a laboratory standard equipment that mimics the dynamics of a washing machine. Details of Tergo-to-meter operation is given in the text.

### Example 10

### DETERGENCY PERFORMANCE COMPARISON OF MATRIX CAPSULES AND LIQUID SAVINASE : EFFECT OF TIME AND TEMPERATURE

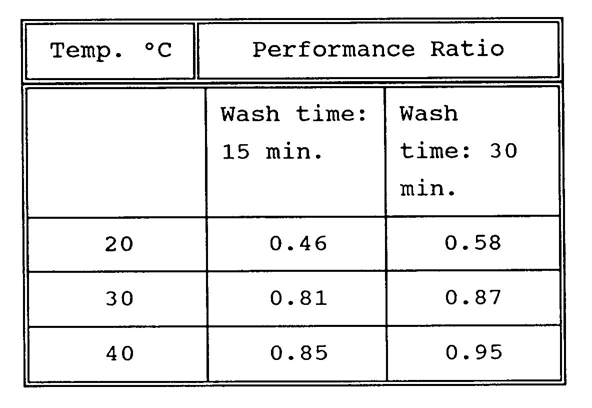

Performance ratio = Detergency with capsules/Detergency with unencapsulated enzyme This example shows that the detergency obtained with the encapsulated enzyme is close to that of unencapsulated enzyme, especially above 30°C.

Detergency is defined by a value Delta Delta R which in turn, is defined as Delta R minus Delta R' where: Delta R is the reflectance value (reflectance unit is an arbitrarily defined unit) of a full detergent composition (i.e., containing actives, electrolyte and enzymes) minus the reflectance value of detergent composition having electrolyte only; thus Delta R takes into account the effect of actives plus enzymes; and

Delta R' is the reflectance value of a detergent composition containing actives and electrolyte (but no enzymes) minus the reflectance value of a detergent composition having electrolyte only; thus Delta R' takes into account the effect of actives only.

### Example 11

Stability of Savinase liquid vs encapsulated Savinase powder in HDL with bleach of the following composition:

| Component | Parts |
|---|---|
| Water | 24.8 |
| Sorbitol (70%) | 15.8 |
| Glycerol | 4.8 |
| Sodium borate 10 H₂O | 4.8 |
| Sodium citrate 2 H₂O | 9.5 |
| Narlex DC-1 (ex. National Starch & Chem.) | 3.0 |
| 50% NaOH | 5.4 |
| DB 100 (Dow Chem.) (Antifoam) | 0.1 |
| Alkylbenzene Sulfonic Acid (anionic) | 21.8 |
| Neodol 25-9 (nonionic) | 10.0 |
| TPCAP* (bleach) | 3,300 ppm active oxygen |

| | |
|---|---|
| * N,N'-terephthaloyl di 6-aminopercarboxycaproic acid. Half-life of liquid Savinase at 37°C < 1 day Half-life of encapsulated Savinase powder at 37°C = 14 days This example shows that the capsules of the invention greatly improves half-life stability of an enzyme. | |

## Claims

1. Matrix capsules comprising:
(a) actives having a particle size of 0.01 to 500 microns;
(b) hydrophobic active-retaining material; and
(c) polymer material surrounding said hydrophobic material, wherein said hydrophobic material has a size of 10 to 1000 µm.

2. Process for preparing matrix capsules comprising active, hydrophobic material and polymer, by dispersing the active into the hydrophobic material and dispersing the active containing hydrophobic material in a solution of the polymer by utilizing a device at shear rates such that:
(i) no more than 50% active is released from said hydrophobic material after shearing;
(ii) the hydrophobic material forms drops of 10 to 1000 microns; and/or
(iii) the emulsion has no more than 5% phase separation for 8 hours or greater.

3. Process for preparing matrix capsules comprising active, hydrophobic material and polymer material, by mixing the active and the hydrophobic material, adding the mixture to the polymer material and applying a shear of lower than 10,000 s⁻¹.

4. Process according to claims 2-3, wherein the mixture of active containing hydrophobic material and polymer is sprayed into a hardening solution.

5. Process according to claims 2-4, wherein the hydrophobic material is selected from material:
(i) retaining at least 50% active after a dispersion of active in hydrophobic material is added to an aqueous solution;
(ii) demonstrating less than 10% phase separation at 37°C over 1 week when active is added to the hydrophobic material to form a dispersion; and/or
(iii) releasing more than 50% of active inside the hydrophobic material after first five minutes of a wash cycle measured at 50°C.

6. Process according to claims 2-5, wherein the hydrophobic material is present in drops with a size of from 100 to 1000 µm.

7. Liquid detergent composition comprising capsules with a size of from 100 to 1000 mµ.

8. Composition according to claim 7, the composition having a structure and preferably containing bleach material.

9. Process for preparing liquid detergent compositions comprising capsules by preparing capsules with a low shear whereafter the capsules are mixed with the liquid detergent composition.

10. Process of dispersing hydrophobic material in a polymer solution by applying shear with a flotation machine, preferably at a low shear rate.
